# EUROPÄISCHE PATENTSCHRIFT

(11) **EP 3 217 919 B1**
(45) Veröffentlichungstag und Bekanntmachung des Hinweises auf die Patenterteilung: **13.05.2020**
(21) Anmeldenummer: 15794567.6
(22) Anmeldetag: 13.11.2015
(51) Int. Cl.: A61C 8/00, A61C 1/08, A61C 13/00

(54) **ABUTMENT-WERKZEUGSET**
ABUTMENT TOOL SET
KIT DE FABRICATION D'ABUTMENT

(30) Priorität: 14.11.2014 EP 14193336
(43) Veröffentlichungstag der Anmeldung: 20.09.2017
(73) Patentinhaber: Ivoclar Vivadent AG, 9494 Schaan (LI)
(72) Erfinder: BURGER, Goran, CH-9472 Grabs (CH); PESCHKE, Arndt, FL-9498 Planken (LI)
(74) Vertreter: Baronetzky, Klaus
(86) Internationale Anmeldenummer: PCT/EP2015/076545
(87) Internationale Veröffentlichungsnummer: WO 2016/075284

(56) Entgegenhaltungen:
- EP-A1- 1 867 297
- WO-A1-00/25695
- KR-B1- 100 786 308

## Beschreibung

Die Erfindung betrifft ein Abutment-Werkzeugset sowie eine Zahnersatz-Erzeugungsvorrichtung, gemäß dem Oberbegriff des Ansprüche 1 bzw. 10.

Implantatgebundene Dentalrestaurationen werden in großem Umfang und seit mehreren Jahrzehnten eingesetzt. Grundlage ist stets ein Implantat, das mit dem Kieferknochen eines Patienten fest verbunden ist, in der Regel über eine Schraubverbindung.

Für die Bereitstellung der eigentlichen Dentalrestauration hat es sich als zweckmäßig herausgestellt, eine Mesostruktur, ein sogenanntes Abutment, zu verwenden, das typischerweise aus Metall wie Titan besteht, aber auch aus einer hochfesten Oxidkeramik bestehen kann, und als Verbindungselement zu der Suprastruktur dient, die meist aus einer Glaskeramik oder einer Feldspatkeramik besteht.

Die Anforderungen an eine derart hergestellte Dentalrestauration sind erheblich:
So ist die Dauerhaltbarkeit ein wichtiges Akzeptanzkriterium, auch unter starken Wechselbelastungen, und auch die Ästhetik ist in besonderem Maße gefordert.

Die Dentalrestauration soll einen transluzenten Charakter haben, ähnlich wie natürliche Zähne. Dies gilt selbstverständlich nicht nur für Einzelzähne, sondern auch für Brücken und dergleichen.

Bereits etwas betagtere Beispiele für derartige Lösungen sind aus der DE 32 41 963 C1 oder der GB 2 119 258 ersichtlich. Zu neueren Lösungen, die auch eine Rotationssicherung ermöglichen, sei auf die US 5 782 918 A1 verwiesen.

Aus Gründen der einfacheren Lagerhaltung, aber auch, um Haftungsfälle sicher auszuschließen, wird typischerweise eine einzige Größe des Abutments vorgehalten. Diese ist für Sechser- und Siebener-Molare ausreichend, nimmt also auch die dort anfallenden Scherkräfte auf. Dies bedingt eine gewisse und nicht unbeträchtliche Höhe des Rohrabschnitts des Abutments, über welchen das Abutment in die Suprastruktur hineinragt.

Wenn nun das gleiche Abutment für eine Eckzahn- oder Schneidezahnrestauration eingesetzt werden soll, wäre mindestens das ästhetische Ergebnis unbefriedigend, da der metallische Rohrabschnitt dann durch die Glaskeramik der Suprakonstruktion ersichtlich wäre, was zu einem ästhetisch unbefriedigenden Gesamteindruck führt.

Man hat daher versucht, über einen sogenannten Opaker das Durchscheinen des metallischen Abutments zu verhindern. Problem bleibt dennoch die vergleichsweise geringe Wandstärke der Suprastruktur bei Standard-Abutments.

Dieses Problem ist Zahntechnikern und insbesondere auch Zahnärzten gut bekannt. Um etwaige Beanstandungen seitens der Patienten vorab zu vermeiden, kürzen Zahnärzte häufig kurzerhand - entgegen den Vorschriften der Hersteller der Abutments - den Rohrabschnitt beispielsweise mit einer einfachen Trennscheibe, um so zu vermeiden, dass der Rohrabschnitt in dünne Bereiche der Suprakonstruktion hineinragt.

Hiermit lässt sich die Primärakzeptanz derartiger Dentalrestaurationen bei den Patienten steigern. Überraschenderweise wird diese Lösung jedoch mit Haltbarkeitsbeanstandungen erkauft, die dazu führen, dass der Zahntechniker oder Zahnarzt die Dentalrestauration in vergleichsweise kurzer Zeit ersetzen muss oder für diese sogar in Regress genommen wird.

Daher liegt der Erfindung die Aufgabe zugrunde, ein Abutment-Werkzeugset bzw. eine Zahnersatz- Erzeugungsvorrichtung gemäß dem Oberbegriff der Ansprüche 1 bzw. 10 zu schaffen, die eine verbesserte Langfristakzeptanz bei implantatgebundenen Dentalrestaurationen ermöglicht.

Diese Aufgabe wird erfindungsgemäß durch Anspruch 1 bzw. 9 gelöst. Vorteilhafte Weiterbildungen ergeben sich aus den Unteransprüchen.

Erfindungsgemäß besonders günstig ist es, dass mit einem einfach gestalteten Fräser eine überraschend auch langzeitverträgliche Kürzung des Rohrabschnitts des Abutments bei Bedarf vorgenommen werden kann. Hierzu weist das Fräser einen Höhenanschlag auf, der zum einen eine präzise Ausrichtung ermöglicht, beispielsweise, indem der Höhenanschlag auf dem Kragen des Abutments aufsteht, und zum anderen ein vorgegebenes Höhenmaß für den Rohrabschnitt ermöglicht.

Beispielsweise ist hierdurch das Implantat in einem vorgegebenen Rastermaß, beispielsweise in den drei Höhen S, M und L, hinsichtlich der Höhe festlegbar.

Hierzu kann es beispielsweise vorgesehen sein, für die Höhe M eine Markierung des Rohrabschnitts bei einem Höhenmaß von 4,2 mm vorzunehmen. Das Höhenmaß berechnet sich dann vom Aufstandsbereich am Kragen des Abutments. Mit einer Mikro-Flex lässt sich der Rohrabschnitt dann auf 4,2mm abflexen. Mit dem erfindungsgemäßen Abutment-Werkzeugset, das den Fräser aufweist, wird dann die Höhe des Rohrabschnitts auf 4mm abgefräst und zugleich eckseitig mit einem Radius versehen. Ein derartiger Radius ist wichtig, um die Kerbwirkungen des Abutments gegenüber der Suprastruktur des Dentalrestaurationsteils zu minimieren und lässt sich erfindungsgemäß nunmehr in überraschend einfacher Weise zuverlässig sicherstellen.

Das erfindungsgemäße Abutment-Werkzeugset dient in sofern im Grunde als Formgebungswerkzeug und nicht zum eigentlichen Kürzen des Rohrabschnitts.

Der erfindungsgemäße Fräser kann als Handfräser ausgebildet sein, Alternativ kann er auch in eine an sich bekannte Fräsmaschine als Werkzeug eingespannt werden. Hierzu weist er einen entsprechend ausgebildeten Schaft aus, mit einem Einspann- oder Betätigungsbereich und einem demgegenüber dickeren Übergangsbereich.

Durch die Anbringung eines Radius oder mindestens einer Schrägfläche ist sichergestellt, dass die Dauerhaltbarkeit gewährleistet ist. Wie Versuche ergeben haben, ist die Dauerbelastbarkeit von mit dem erfindungsgemäßen Hilfselement gekürzten Rohrabschnitten überraschend wesentlich verbessert; im Vergleich mit per Handsäge gekürzten Rohrabschnitten. Besonders günstig hierbei ist es, dass durch die Anbringung des Radius oder der Abrundung des Rohrabschnitts außen die Einleitung von Kerbwirkungskräften in die Suprastruktur reduziert oder sogar vollständig vermieden werden kann.

Durch die automatische Parallelausrichtung der Stirnfläche des Rohrabschnitts mit dem Kragen werden auch Ausrichtfehler, die zu einer Schrägstellung der Suprastruktur führen können, sicher vermieden, und damit Problemstellen in der Okklusalposition des Zahnersatzes, die dann ein späteres Nacharbeiten erfordern - wenn sie überhaupt beseitigt werden.

Erfindungsgemäß lässt sich in einfacher Weise der Fräser dann einsetzen, wenn eine Dentalrestauration erstellt werden soll, die kleiner oder zumindest weniger hoch als die Maximalgröße ist. Erfindungsgemäß wird hierzu dann die Höhe des Rohrabschnitts festgelegt, beispielsweise auf die Höhe 4mm = S oder 5mm = M. Die Höhenfestlegung erfolgt so, dass die Wandstärke zur Okklusalfläche ein vorgegebenes Minimalmaß nicht unterschreitet. Dieses Minimalmaß kann auf 2mm oder beispielsweise auch auf 1,5mm festgelegt werden. Die Kürzung kann beispielsweise erfolgen, indem das als Fräser ausgebildete Hilfselement in ein ohnehin vorhandenes dentales Handstück eingespannt wird. Das ebenfalls fixierte Abutment wird dann auf exakt das vorgegebene Maß von beispielsweise 4mm Rohrabschnittshöhe zurechtgefräst, wobei die Drehzahlen des dentalen Handstücks typischerweise 5000 bis 15000 , oder auch bis zu 50000, Umdrehungen pro Minute betragen können.

In einer alternativen Ausgestaltung ist der Fräser für die Realisierung von Markierungen vorbereitet. Es wird hierzu über der Fräser die erwünschte Markierung in der Höhe beispielsweise 4 mm angebracht, und über einen an sich bekannten Fräser wird dann die erwünschte Höhe eingestellt. Hiernach wird das dentale Handstück zur Aufbringung der erwünschten Ausrundungen bzw. Radien erneut eingesetzt, und durch manuelles Drehen des Fräsers wird eine Nachbearbeitung erledigt, die die exakte gewünschte Form der Rohrabschnitt-Stirnfläche sicherstellt.

In beiden Fällen besteht der besondere Vorteil, dass eine exakt nachbearbeitbare und vorbestimmte Oberflächengestaltung im Bereich der Stirnfläche des Rohrabschnitts realisierbar ist.

Auch wenn die Anbringung einer Ausrundung oder eines Radius am Außenumfang der Stirnfläche erfindungsgemäß besonders wichtig ist, versteht es sich, dass nichts dagegen spricht, auch eine entsprechende Ausrundung an dem radial inneren Ende der Stirnfläche des Rohrabschnitts vorzunehmen. Abgesehen von der exakten Formgebung und insofern Nacharbeitstreue lässt sich hiermit auch zugleich innenseitig und auch außenseitig der Stirnfläche ein Entgraten und Versäubern nach dem definierten Kürzen der Höhe des Rohrabschnitts sicherstellen.

Wenn an der Mesostruktur, also an dem Abutment, und an der Suprastruktur, also der keramischen Dentalrestauration, Rotationsschutzelemente vorgesehen sind, bleiben diese auch nach der Höhenkorrektur durch das erfindungsgemäße Hilfselement vollständig funktionsfähig.

Erfindungsgemäß ist es auch günstig, wenn das erfindungsgemäße Höhenmodifikationswerkzeug in die automatische CAD/CAM-Erstellung der Dentalrestauration eingebunden ist. Hierzu kann beispielsweise in der Designphase festgelegt werden, das die Maximalhöhe der Suprastruktur, von Kragen des Abutments aus berechnet, als obere Randbedingung die doppelte Höhe des Rohrabschnitts haben soll, und als untere Randbedingung, dass die Wandstärke zur Okklusalfläche mindestens 1,5mm betragen soll.

Die CAD-Software entscheidet dann über den erforderlichen Einsatz des erfindungsgemäßen Höhenmodifikationswerkzeugs, das als Abutment-Werkzeugset ausgebildet ist, in dem vorgegebenen Rastermaß, und gibt dieses zugleich auch vor. Es versteht sich, dass bei unterschiedlichen Durchmessern von Implantaten und Abutments - und damit auch unterschiedlichen Durchmessern der zughörigen Rohrabschnitte - das Werkzeug einen je hieran angepassten Durchmesser haben kann.

Es ist auch möglich, und erfindungsgemäß besonders günstig, wenn das Abutment-Werkzeugset einen integrierten Höhenanschlag aufweist, der bei der spanabhebenden Bearbeitung exakt dann wirksam wird, wenn die Zielhöhe erreicht ist. Hierzu ist der Höhenanschlag bevorzugt rotationssymmetrisch ausgestaltet. Beispielsweise kann er als Stift ausgebildet sein, der auf der Implantatschraube, die sich mit ihrem Schraubenkopf am Fuß des Rohrabschnitts erstreckt, aufliegt, oder als Hülse, die sich auf den Kragen des Abutments abstützt.

Bei der Realisierung als Hülse stützt sich dann der Fräser oben an der Hülse ab. Hierzu weist er einen Absatz zwischen dem eigentlichen Arbeitsabschnitt, an dem die Schneiden des Fräsers ausgebildet sind, und einem Übergangsbereich auf, der eine Anschlagfläche auf der Hülse bildet. Durch diese Ausgestaltung ist sicherstellbar, dass exakt die erwünschte Höhe des Rohrabschnitts des Abutments, berechnet vom Kragen des Abutments, erreicht wird.

Es ist auch eine Kombination dieser Höhenanschläge möglich.

Nachdem die Schraubenköpfe der Implantatschrauben typischerweise nicht standarisiert sind und dementsprechend eine unterschiedliche Stärke aufweisen, ist die Auswahl des Kragens des Abutments als Referenz bevorzugt.

Erfindungsgemäß besonders günstig ist es, wenn die Hülse Führungselemente aufweist, die für die rotationssymmetrische Anlage an dem Rohrabschnitt des Abutments bestimmt sind. Hierdurch ist eine präzise und achsparallele Führung zwischen Hülse und Abutment gewährleistet. Die Führungselemente können sich entweder an der Innenfläche des Rohrabschnitts oder an der Außenfläche des Rohrabschnitts erstrecken, oder bei Bedarf auch an beiden.

In weiterer vorteilhafter Ausgestaltung ist es vorgesehen, dass die Hülse mindestens eine Spanabfuhrausnehmung aufweist. Die Spanabfuhrausnehmung erstreckt sich bevorzugt zirkular durch die Hülsenaussenwand, also die Wand der Hülse, hindurch und/oder dem Stirnbereich des Rohrabschnitts benachbart und dient dazu, Späne, die bei der spanabhebenden Bearbeitung der Stirnfläche des Rohrabschnitts entstehen, nach außen abzuführen. Dementsprechend sind diese Ausnehmungen nach außen offen und bevorzugt leicht abgeschrägt, um die Spanabfuhr zu erleichtern.

Die Spanabfuhrausnehmungen können in beliebiger anderer geeigneter Weise ausgestaltet sein, z.B. schräg zur Dreh-Achse, der Spanabfuhrrichtung folgend.

In vorteilhafter Ausgestaltung ist es vorgesehen, dass die Höhenfestlegung des Rohrabschnitts des Abutments in Abstimmung mit vorhandenen ausbrennbaren presskeramischen Hilfsteilen erfolgt. Diese dienen dazu, die Stärke eines Klebespalts nach materialspezifischen Gesichtspunkten präzise und gleichmäßig festzulegen, wobei mit der vorgegebenen und normierten Länge des Rohrabschnitts zugleich vorgegebene und normierte Klebeflächen vorliegen, so dass die Sicherheit, dass keine Fehlklebung erfolgt, vergrößert ist.

Bevorzugt weist der Rohrabschnitt außen einen ganz leicht konusartigen Verlauf auf, mit einem Konuswinkel zwischen 0,5° und 8°. Entsprechendes gilt auch für die hierzu passende Innenfläche einer Hülse des Hilfselements, so dass diese ebenfalls in einem Innenkonuswinkel zwischen 0,5° und 8° verläuft.

In einer vorteilhaften Augestaltung ist es vorgesehen, dass mit dem Abutment-Werkzeugset der Rohrabschnitt auf die patientenspezifische Höhe in spanabhebender Bearbeitung kürzbar ist, insbesondere über eine Dentalfräsvorrichtung und/oder eine CAM-Vorrichtung.

In einer weiteren vorteilhaften Ausgestaltung ist es vorgesehen, dass ein zentraler Stift des Abutment-Werkzeugsets vorgesehen ist, der für die Anlage an dem Kopf einer das Abutment mindestens teilweise durchtretenden Schraube bestimmt ist.

In einer weiteren vorteilhaften Ausgestaltung ist es vorgesehen, dass das Abutment-Werkzeugset einen zentralen Stift aufweist, der an einem Stirnbereich eines Glockenkörpers des Abutment-Werkzeugset insbesondere einstückig angeformt ist, welcher Stift sich durch den Glockenkörper hindurcherstreckt, diesen insbesondere überragt.

In einer weiteren vorteilhaften Ausgestaltung ist es vorgesehen, dass das Abutment-Werkzeugset einen insbesondere rastbaren Höhenanschlag aufweist, der für die Anlage an dem Abutment bestimmt ist, welcher Höhenanschlag in einer vorgegebenen Relativposition zu einer Stirnfläche des Rohrabschnitts ist.

In einer weiteren vorteilhaften Ausgestaltung ist es vorgesehen, dass das Abutment-Werkzeugset zum Kürzen des Rohrabschnitts ein spanabhebendes Werkzeug, insbesondere einen Handfräser aufweist, der von dem Glockenkörper geführt ist.

In einer weiteren vorteilhaften Ausgestaltung ist es vorgesehen, dass eine Stirnfläche des Glockenkörpers des Abutment-Werkzeugsets insbesondere kreuzverzahnte oder einschneidende Zähne aufweist, die für das Kürzen des Rohrabschnitts des Abutments bestimmt sind.

In einer weiteren vorteilhaften Ausgestaltung ist es vorgesehen, dass das Abutment-Werkzeugset einen Markierer aufweist, der mindestens eine Markierung an dem Abutment anzubringen in der Lage ist, wobei die Markierung eine Kürzung des Rohrabschnitts des Hilfselements indiziert.

In einer weiteren vorteilhaften Ausgestaltung ist es vorgesehen, dass die Indikation der Kürzung in einem vorgegebenen Rastermaß erfolgt, insbesondere in 3 Höhen, in Abhängigkeit von der Größe, insbesondere der vertikalen Erstreckung der Suprastruktur, die die Dentalrestauration mit ausbildet.

In einer weiteren vorteilhaften Ausgestalltung ist es vorgesehen , dass im Stirnbereich eines Glockenkörpers des Abutment-Werkzeugsets ein ringförmiges konkaves Profil mit einer Hohlkehle vorgesehen ist, für die spanabhebende Bearbeitung der Stirnfläche des Rohrabschnitts des Abutments mit einer hierzu passenden konvexen Form.

In einer weiteren vorteilhaften Ausgestaltung ist es vorgesehen, dass das Abutment-Werkzeugset ein Höhenanschlagselement aufweist, dass sich mit einem Innendurchmesser außerhalb des Rohrabschnitt des Abutments erstreckt, der größer als oder gleich wie der Außendurchmesser des Rohrabschnitts ist und das für die Anlage an dem Kragen des Abutments zur Bereitstellung eines Höhenanschlags bestimmt ist.

In einer weiteren vorteilhaften Ausgestaltung ist es vorgesehen, dass das Höhenanschlagselement sich in Spielpassung zum Rohrabschnitt des Abutments erstreckt und insbesondere insofern ein Verdrehen des Abutment-Werkzeugsets mit dem Höhenanschlagelement gegenüber dem Abutment ermöglicht.

In einer weiteren vorteilhaften Ausgestaltung ist es vorgesehen, dass das Hilfselement einen Glockenkörper aufweist, dessen offenes freies Ende einen umlaufenden Rand aufweist, der als Höhenanschlagelement dient, insbesondere gegenüber einer Aufstandsfläche des Kragens des Abutments.

Weitere vorteilhafte Einzelheiten und Merkmale ergeben sich aus der nachfolgenden Beschreibung mehrere Ausführungsbeispiele der Erfindung anhand der Zeichnung.

Es zeigen:
- Fig. 1: eine schematische Ansicht durch ein Abutment einer erfindungsgemäßen Zahnersatz-Erzeugungsvorrichtung;
- Fig. 2: eine schematische Schnittansicht durch das Abutment gemäß Fig. 1;
- Fig. 3: eine schematische Schnittansicht durch ein Abutmen-Werkzeugset einer erfindungsgemäßen Zahnersatz-Erzeugungsvörrichtung, unter Darstellung zusätzlich des Abutments und der Implantatschraube;
- Fig. 4: eine weitere Ausführungsform des Abutment-Werkzeugset, in einer Darstellung gemäß Fig. 3;
- Fig. 5: eine weitere Darstellung einer weiteren Ausführungsform eines erfindungsgemäßen Abutment-Werkzeugset in der Darstellung ebenfalls gemäß Fig. 4;
- Fig. 6: eine weitere Darstellung einer weiteren Ausführungsform eines erfinungsgemäßen Abutment-Werkzeugset in der Darstellung ebenfalls gemäß Fig. 5;
- Fig. 7: eine weitere Darstellung einer weiteren Ausführungsform eines erfindungsgemäßen Abutment-Werkzeugset in der Darstellung ebenfalls gemäß Fig. 6;
- Fig. 8: eine vergrößerte schematische Darstellung eines Details aus Fig. 7;
- Fig. 9: eine besonders bevorzugte Ausführungsform eines erfindungsgemäßen Abutment-Werkzeugsets; und
- Fig. 10: eine modifizierte Ausgestaltung eines erfindungsgemäßen Abutments-Werkzeugsets.

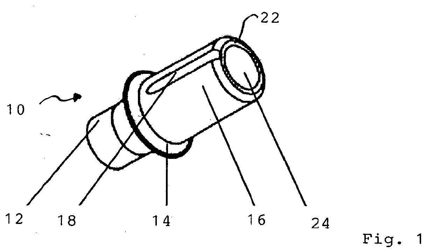

Das in Fig. 1 dargestellte Abutment 10 weist einen Implantatanschlussbereich 12 auf, der sich in zervikaler Richtung erstreckt und bei einem Kragen 14 endet. Der Kragen geht über Innenradien in einen Rohrabschnitt 16 über, der für die Aufnahme und Lagerung der Suprastruktur gedacht ist.

Der Rohrabschnitt 16 weist eine Nut 18 als sich nach radial innen erstreckende Rotationssicherung auf. Bei Einsatz des Abutments für eine Einzelrestauration wie eine Krone verhindert die Nut 18 ein versehentliches Verdrehen und dient insofern als Rotationsschutz. Ein entsprechender, in die Nut 18 passender Steg ist dementsprechend dann in der Suprastruktur ausgebildet.

Wenn das Abutment für einen Pfeilerzahn einer Brücke verwendet wird, verbleibt die Nut 18 in der hier dargestellten Form. Jedoch besteht kein Steg, der in die Nut 18 eingreifen würde, innen an der Suprastruktur. Hierdurch lässt sich die Verdrehsicherung der Brücke durch die zutreffende Ausrichtung zu dem anderen Pfeilerzahn hin gewährleisten, ohne dass es zu Verdrehspannungen kommen könnte.

Der Rohrabschnitt 16 endet im Bereich seiner Stirnfläche 20. Die Eintrittsöffnung des Rohrabschnitts 16 bildet zugleich einen Kanal 24 für die in Fig. 1 nicht dargestellte Implantatschraube.

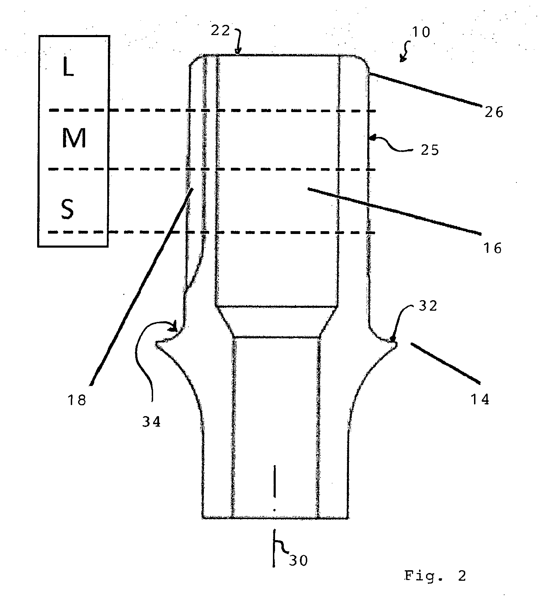

Aus Fig. 2 ist eine prinzipielle Schnittdarstellung des Abutments 10 ersichtlich. Es sind Normhöhen "L", "M" und "S" eingetragen, auf die der Rohrabschnitt 16 des Abutments kürzbar ist. Wie ersichtlich ist, erstreckt sich die Nut 18 auch unterhalb der Normhöhe "S", so dass die Verdrehsicherung auch bei Kürzung des Abutments 10 auf die Höhe S gewährleistet ist.

Wie aus Fig. 2 ersichtlich ist, ist der Übergang zwischen der Stirnfläche 22 und der Außenfläche 25 des Rohrabschnitts 16 mit einem Radius 26 ausgerundet. Die Größe dieses Radiuses 26 lässt sich in weiten Bereichen an die Erfordernisse anpassen; er beträgt in der Regel zwischen 0,05mm und 1,0mm und bevorzugt etwa 0,2mm. Durch diesen Außenradius 26 ist überraschend die Dauerhaltbarkeit der Suprastruktur deutlich verbessert; offenbar vergleichmäßigt der Außenradius 26 stark die maximale lokale Krafteinleitung in die Suprastruktur.

Wie ersichtlich ist, weist der Kragen 14 ein kreisförmig umlaufenden und sich senkrecht zu einer Achse 30 des Abutments erstreckenden Aufstandsbereich 32 auf. Über einen hohlkehligen Radius 34 geht die Aufstandfläche 32 in die Außenfläche 25 des Rohrabschnitts 16 über.

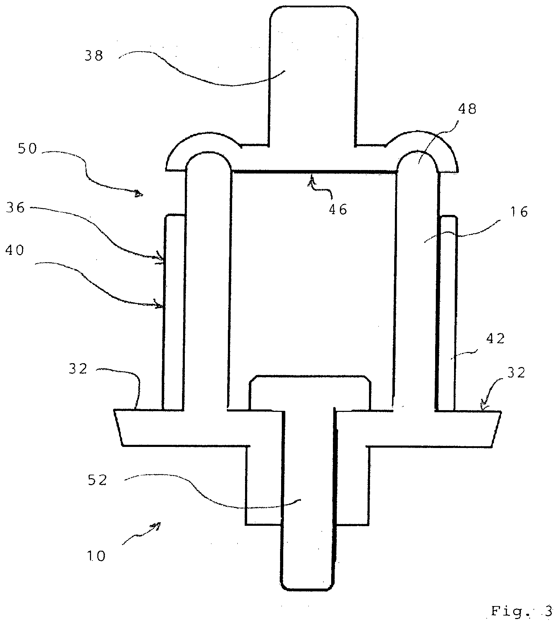

Erfindungsgemäß ist - wie es aus Figur 3 ersichtlich ist - es vorgesehen, die Kürzung des Rohrabschnitts 16 des Abutments 10 über ein Abutment-Werkzeugset 11 mit einem Fräser 36 vorzusehen, das in Fig. 3 dargestellt ist. Der Fräser 36 ist von der prinzipiellen Querschnittform her wie eine Art Kronenbohrer ausgebildet. Es weist einen Schaft 38 auf, dessen Außendurchmesser für den Antrieb über ein beliebiges in der Zahnarztpraxis oder sonstiges im Dentalbereich vorhandenes maschinelles Werkzeug geeignet ist. Hierzu beträgt der Schaftdurchmesser beispielsweise 2,35mm oder 3mm an dem Einspann- oder Betätigungsbereich

Der Glockenkörper 40 des Fräsers 36 weist einen zylindrischen Abschnitt oder eine Hülse 42 auf, der bzw. die mit seinem bzw. ihrem Innendurchmesser in minimaler Spielpassung zu der Außenfläche 25 des Rohrabschnitts 16 des Abutments 10 passt. Der zylindrische Abschnitt erstreckt sich unten bis zu der Aufstandsfläche 32 des Kragens 14, die als Bemaßungsreferenz dient.

Der hier dargestellte Fräser 36 ist für die Kürzung des Abutments 10 auf die Höhe "L" bestimmt. Hierzu weist es an den Außenbereichen seiner Stirnfläche 46 eine mit Schneiden besetzte und insofern bezahnte Hohlkehle 48 auf. Dort wird bei Drehung des Fräsers 36 über den Schaft 38 spanabhebend das Abutment 10 gekürzt, und zwar so lange, bis der zylindrische Abschnitt auf der Aufstandsfläche 32 aufsetzt. Für das Fräsen kann die Stirnfläche 46 kreuzverzahnte oder einschneidige Zähne aufweisen, für ein Schleifen kann diese mit Diamanten bestückt sein.

Wie aus Fig. 3 ersichtlich ist, sind Spanabfuhrausnehmungen 50 gleichmäßig um den Umfang des Fräsers 36 verteilt, und zwar knapp unterhalb der Stirnfläche 46 an dem zylindrischen Hülse 42.

Wie aus Fig. 3 ebenfalls ersichtlich ist, erstreckt sich eine Implantatschraube 52 durch das Abutment 10 nach unten hindurch; diese dient in an sich bekannter Weise der Verankerung an dem zugehörigen Implantat.

Es versteht sich, dass für die drei Höhen "L", "M" und "S" des Rohrabschnitts 16 drei entsprechend bemessene Hülsen 42 vorgesehen sind. Durch die Ausgestaltung an der Hohlkehle 48 mit einem Innenradius ist sichergestellt, dass auch bei Kürzung des Rohrabschnitts 16 der Außenradius 26 (vgl. Fig. 2) erhalten bleibt.

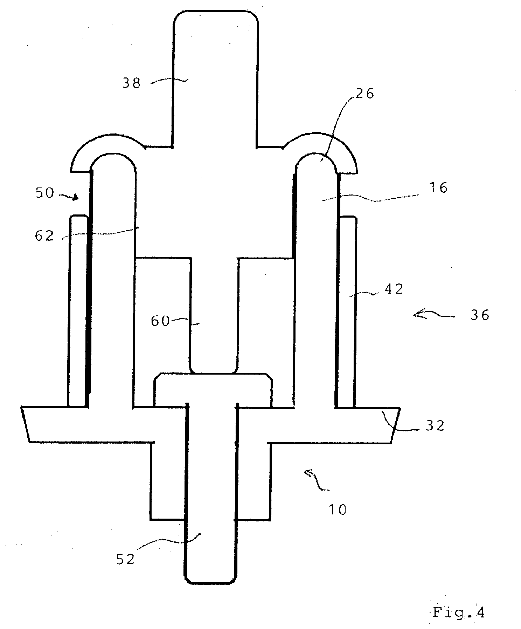

Eine weitere Ausgestaltung des Abutment-Werkzeugset 11 ist aus Fig. 4 ersichtlich. Dort wie auch in den weiteren Figuren weisen gleiche Bezugszeichen auf gleiche Teile hin. Das Abutment-Werkzeugset 11 gemäß Fig. 4 weist einen Anschlagstift 60 auf, der für die Auflage auf der Implantatschraube 52 bestimmt ist. Der Anschlagstift 60 erstreckt sich von einem Innenzylinder 62 des Abutment-Werkzeugset 11 ausgehend zur Implantatschraube 52 hin, so dass der Höhenanschlag des Abutment-Werkzeugset 11 durch die Implantatschraube 52 zusätzlich begrenzt ist.

In einer weiteren, hier nicht dargestellten, vorteilhaften Ausgestaltung ist es vorgesehen, dass der Glockenkörper 40 des Abutment-Werkzeugset 11 an dem zylindrischen Abschnitt 42 Markierungen aufweist. Während die Maximallänge des Glockenkörpers 40 dann der Höhe "L" entspricht, ist eine Markierung vorgesehen, die der Höhe "M" entspricht, und eine weitere Markierung, die der Höhe "S" entspricht. Bei Bedarf kann nun der Zahnarzt oder Zahntechniker den zylindrischen Abschnitt auf "M" bzw. sogar auf "S" kürzen und kann dann ohne zusätzliche Lagerhaltung die erwünschte Kürzung des Rohrabschnitts 16 des Abutments 10 entweder auf "L", auf "M" oder auf "S" vornehmen.

Dass die manuelle Kürzung des Glockenkörpers 40 vielleicht nicht in optimaler Qualität erfolgt, ist erfindungsgemäß völlig unkritisch, denn die formbestimmende Hohlkehle 48 bleibt von der Kürzung stets unberührt, so dass das Abutment 10 in perfekter Qualität auch erfindungsgemäß erzeugbar ist.

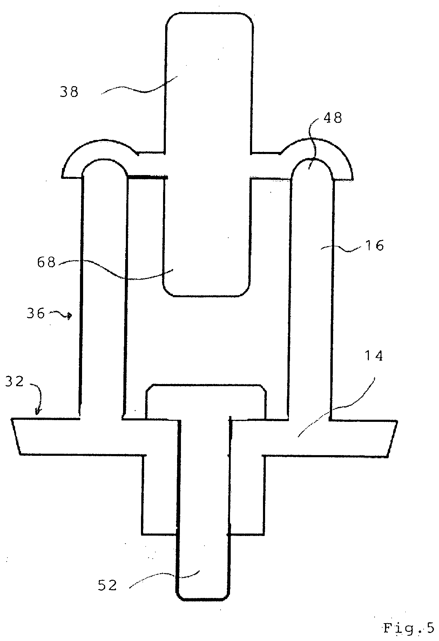

Aus Fig. 5 ist eine modifizierte Ausgestaltung des Abutment-Werkzeugset 11 ersichtlich. Dieses weist anstelle des Glockenkörpers 40 einen Innenkörper 66 auf, der für das Eindringen in den Rohrabschnitt 16 bestimmt ist. Der Innenkörper 66 ist mit einem Anschlussstift 68 mit dem Schaft 38 verbunden, und das Abutment-Werkzeugset 11 weist in gleicher Weise die Hohlkehle 48 für die Bereitstellung der Außenradius-Form des Rohrabschnitts 16 auf.

Durch die Form des Innenkörpers 66 wird in gleicher Weise ein Höhenanschlag gewährleistet, allerdings nicht auf der Aufstandsfläche 32, sondern auf der Implantatschraube 52.

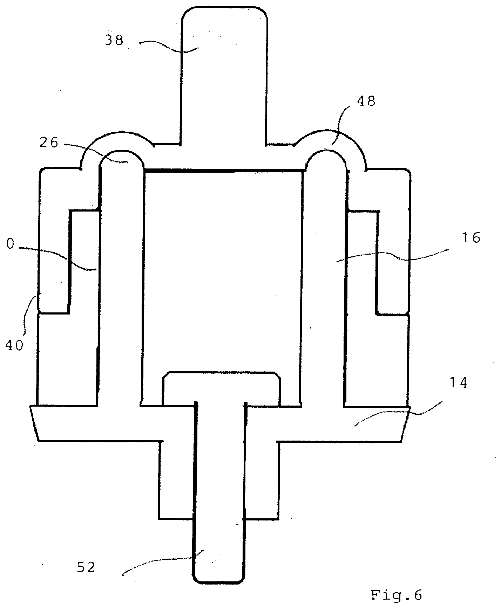

Aus Fig. 6 ist eine weitere Ausführungsform eines erfindungsgemäßen Abutment-Werkzeugset 11 ersichtlich. Anstelle des Innenkörpers ist dort ein Außenkörper 70 vorgesehen, der sich an den gekürzten Glockenkörper 40 nach unten anschließend erstreckt und auf der Aufstandsfläche 32 des Kragens 14 aufsteht. Auch hier ist in gleicher Weise eine Hohlkehle 48 zur Bereitstellung des Außenradius 26 des Rohrabschnitts 16 vorgesehen.

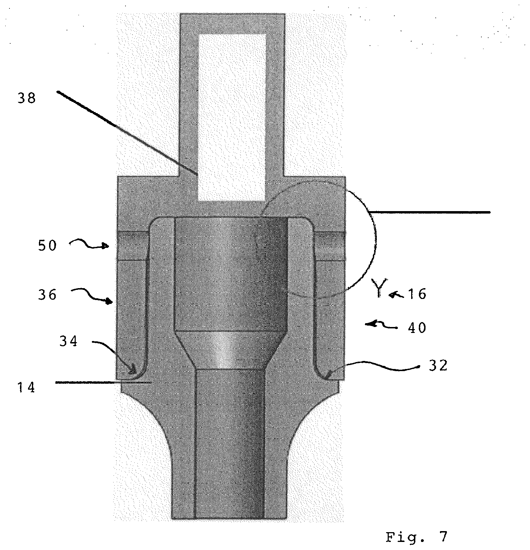

Aus Fig. 7 ist eine weitere Ausführungsform eines erfindungsgemäßen Abutment-Werkzeugset 11 ersichtlich. Der Glockenkörper 40 endet wiederrum außen/unten auf der Aufstandsfläche 32 des Kragens 14. Er weist einen balligen Aufbau entsprechend dem Radius 34 des Übergangs zwischen dem Rohrabschnitt 16 und dem Kragen 14 auf.

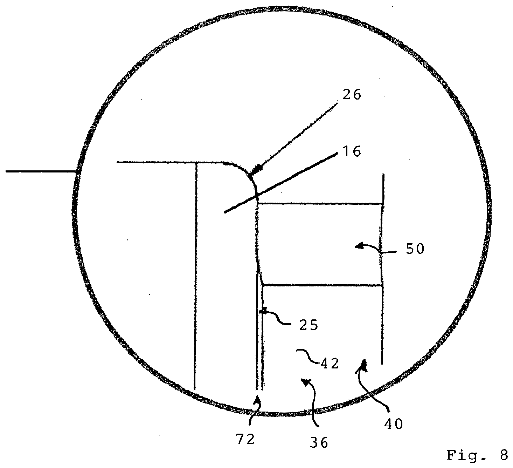

Aus Fig. 8 ist eine Detailansicht des Teils Y aus Fig. 7 ersichtlich. Es ist deutlich der Außenradius 26 ersichtlich, der durch die Hohlkehle 48 des Fräsers 36 an den Rohrabschnitt 16 erzeugt wird.

Der zylindrische Abschnitt 42 des Glockenkörpers 40 des Abutment-Werkzeugsets 11 weist ein kleines Spiel 72 gegenüber der Außenfläche 25 des Rohrabschnitts 16 auf, so dass keine oder höchstens eine minimale Reibung bei der spanabhebenden Bearbeitung entsteht.

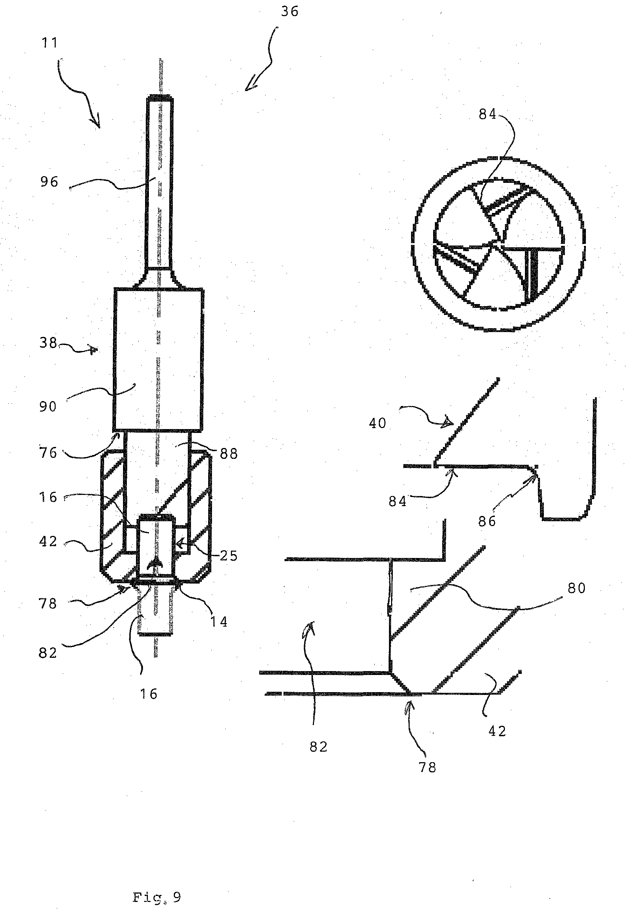

In Fig. 9 ist eine bevorzugte Ausführungsform des Erfindungsgemäßen Abutment-Werkzeugsets 11 dargestellt. Das Abutment-Werkzeugset 11 ist in dieser Ausführungsform zweiteilig und besteht aus einem Fräser 36 und aus einer Hülse 42, die den Fräser aufnimmt und führt. Hierzu taucht der Fräser 36 in die Hülse 42 mindestens teilweise ein. Die Hülse 42 ist im Querschnitt U-förmig. Sie weißt eine Führungsöffnung 82 auf, die in ihrem Innendurchmesser zum Aussendurchmesser des Rohrabschnitts 16 des Abutments passt und an der Aussenfläche 25 des Rohrabschnitt 16 geführt ist. Der Boden 80 der Hülse 42 weist insofern die Führungsöffnung 82 zentral auf. Der Boden 80 bildet auch eine Stützfläche 78, die dafür ausgebildet ist, auf den Kragen 14 des Abutments 10 abgestützt zu werden.

Der Fräser 36 weist ferner einen Absatz zwischen einem Arbeitsabschnitt 88 und einem Übergangsbereich 90 auf. Der Übergangsbereich 90 weist einen größeren Durchmesser als der Arbeitsabschnitt 88 auf, und der Übergang bildet eine Anschlagsfläche 76. Diese liegt auf der Hülse 42 auf, wenn die Fräsbearbeitung des Fräsers abgeschlossen ist.

Damit wird durch die Höhe der Hülse 42 die exakte Zielhöhe des Rohrabschnitts 16 des Abutments 10 festgelegt.

Der Schaft 38 des Fräsers 36 besteht ausser dem Übergangsbereich 90 auch aus einem Einspann- oder Betätigungsbereich 96. Dieser weist einen gegenüber dem Übergangsbereich 90 kleineren Durchmesser auf und ist entweder für das Einspannen in einer Dentalfräse oder für die manuelle Betätigung bestimmt.

Aus der vergrößerten Detailansicht des Fräsers 36 ist ersichtlich, dass der Fräser Schneiden 84 aufweist, die sich über eine Hohlkehle 86 hinweg nach unten erstrecken. Insofern bildet auch dieser Teil des Fräsers 36 wiederum einem Glockenkörper 40.

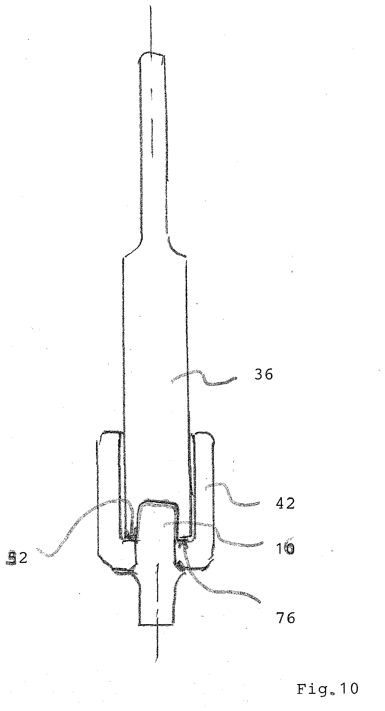

Aus Fig. 10 ist eine modifizierte Ausgestaltung eines erfinungsgemäßen Werkzeugsets ersichtlich. Bei dieser ist die Anschlagfläche 76 nach unten verlagert. Die Anschlagsfläche 76 ist zugleich die Stirnfläche des Fräsers 36 und umgibt den rohrförmigen Abschnitt 16. Bei Anlage an den Boden 92 der Hülse 42 ist die Zielhöhe erreicht, wobei der Fräser 36 glockenförmig ausgebildet ist und für das Kürzen des rohrförmigen Abschnitts 16 an bestimmten Stellen wie bereits anhand von Fig. 9 beschrieben, einen Dreischneider aufweisen kann.

Um die Reibung gegenüber der Hülse 42 gering zu halten, ist der Fräser 36 mit Spiel in der Hülse 42 geführt.

Während das erfindungsgemäße Abutment-Werkzeugset bevorzugt als Handfräser ausgebildet ist, ist es alternativ auch möglich, das Werkzeugset im Rahmen der CAM-Herstellung als maschinelles Werkzeug zu realisieren.

## Patentansprüche

1. Abutment-Werkzeugset für dentale Abutments, wobei das Werkzeugset aus einem Fräser (36), einer Hülse (42) und einem Abutment (10) besteht, und wobei an dem Fräser mindestens eine Anschlagsfläche (76) ausgebildet ist, die sich zur Hülse (42) hin erstreckt, wobei das Abutment (10) insbesondere über eine lösbare Verbindung an dem Implantat lagerbar ist und einen Implantatanschluss (12) und einen Rohrabschnitt (16) aufweist, zwischen denen sich ein nach auswärts vorspringender Kragen (14) erstreckt, **dadurch gekennzeichnet, dass** die Hülse (42) eine Stützfläche (78) für die Abstützung an dem Abutment (10), dessen rohrförmiger Abschnitt (16) mit dem Fräser (36) formbar ist, aufweist.

2. Abutment-Werkzeugset nach Anspruch 1, **dadurch gekennzeichnet, dass** die Hülse (42) gegenüber dem Fräser (36) getrennt ist und als austauschbares Teil ausgebildet ist, und dass der Fräser (36) teilweise in die Hülse einsteckbar ist und dort einen Außendurchmesser aufweist, der zu dem Innendurchmesser der Hülse (42) passt, insbesondere in einer Spielpassung.

3. Abutment-Werkzeugset nach einem der vorhergehenden Ansprüche, **dadurch gekennzeichnet, dass** die Hülse (42) einen Boden (80) mit einer Führungsöffnung (82) aufweist, welche Führungsöffnung (82) über den rohrförmigen Abschnitt (16) des Abutments (10) stülpbar ist und dass die Hülse (42) den Fräser (36) auf einem Kragen (14) des Abutments (10) abstützt.

4. Abutment-Werkzeugset nach einem der vorhergehenden Ansprüche, **dadurch gekennzeichnet, dass** der Fräser (36) als Mehrschneider, insbesondere als Drei-Schneider, ausgebildet ist, und dass der Fräser (36) den rohrförmigen Abschnitt (16) des Abutments (10) von oben übergreift.

5. Abutment-Werkzeugset nach einem der vorhergehenden Ansprüche, **dadurch gekennzeichnet, dass** Schneiden (84) des Fräsers (36) eine Hohlkehle (86) ausbilden, die einen Eckradius des rohrförmigen Abschnitts (16) des Abutments (10) fräsen.

6. Abutment-Werkzeugset nach einem der vorhergehenden Ansprüche, **dadurch gekennzeichnet, dass** der Fräser (36) einen Arbeitsabschnitt (88) und einen Schaft (38) aufweist und dass der Arbeitsabschnitt (88) über die Anschlagsfläche (76) zum Schaft (38) übergeht und eine Höhe aufweist, die geringer als die Höhe der Hülse (42) von dem Boden (80) ausgehend ist.

7. Abutment-Werkzeugset nach einem der vorhergehenden Ansprüche, **dadurch gekennzeichnet, dass** ein rohrförmiger Abschnitt (16) des Abutments (10) Markierungen aufweist, insbesondere drei Markierungen, entsprechend Ziehlhöhen S, M und L des rohrförmigen Abschnitts (16), auf welche Ziehlhöhen der rohrförmige Abschnitt (16) mit dem Fräser (36) kürzbar ist.

8. Abutment-Werkzeugset nach einem der vorhergehenden Ansprüche, **dadurch gekennzeichnet**, der Fräser (36) als Handfräser oder als maschineller Fräser ausgebildet ist.

9. Abutment-Werkzeugset für dentale Abutments, wobei das Werkzeugset aus einem Fräser (36), einer Hülse (42) und einem Abutment (10) besteht, und wobei an dem Fräser mindestens eine Anschlagsfläche (76) ausgebildet ist, die sich zur Hülse (42) hin erstreckt, wobei das Abutment (10) insbesondere über eine lösbare Verbindung an dem Implantat lagerbar ist und einen Implantatanschluss (12) und einen Rohrabschnitt (16) aufweist, zwischen denen sich ein nach auswärts vorspringender Kragen (14) erstreckt, **dadurch gekennzeichnet, dass**
der Fräser (36) mindestens eine Anschlagsfläche aufweist, die für die mindestens indirekte Anlage auf einer Fläche des Abutments (10) bestimmt ist, insbesondere auf dem Kragen (14) des Abutments, und über welchen Fräser (36) die Länge oder Höhe des Rohrabschnitts (16) des Abutments (10) festlegbar ist.

10. Abutment-Werkzeugset nach Anspruch 9, **dadurch gekennzeichnet, dass** der Fräser (36) eine Hülse (42) als Höhenanschlagselement aufweist, das die Fräsbewegung unter Abfräsen des rohrförmigen Abschnitts (16) des Abutments (10) begrenzt, welche Hülse (42) gegenüber dem Kragen (14) des Abutments einen Anschlag bildet.

11. Abutment-Werkzeugset nach Anspruch 9 oder 10, **dadurch gekennzeichnet, dass** der Fräser (36) einen Glockenkörper (40) bildet, dessen Stirnseite eine Hohlkehle (84) aufweist, die für die Formung der Stirnfläche des Rohrabschnittes (16) bestimmt ist.

12. Abutment-Werkzeugset nach einem der Ansprüche 9 bis 11, **dadurch gekennzeichnet, dass** der Fräser (36) einen Glockenkörper (40) aufweist, und dass eine Hülse (42) den Glockenkörper umgibt und insbesondere aus Kunststoff besteht.

13. Abutment-Werkzeugset nach einem der Ansprüche 9 bis 11, **dadurch gekennzeichnet, dass** die Hülse (42) mindestens eine Spanabfuhr-Ausnehmungen (50) aufweist, die einem Stirnbereich eines Glockenkörpers (40) des Fräsers (36) benachbart ist.

14. Abutment-Werkzeugset nach einem der Ansprüche 9 bis 13, **dadurch gekennzeichnet, dass** die Anschlagfläche (76) an einer Stirnseite des Fräsers (36) ausgebildet ist und für den Anschlag an einen Boden (94) der Hülse (42) bestimmt ist.

## Claims

1. An abutment tool set for dental abutments, wherein the tool kit consists of a milling cutter (36), a sleeve (42) and an abutment (10), and wherein at least one stop surface (76) extending towards the sleeve (42) is formed on the milling cutter, wherein the abutment (10) is mountable on the implant, in particular via a detachable connection, and comprises an implant connection (12) and a tube portion (16) between which an outwardly projecting collar (14) extends, **characterized in that** the sleeve (42) has a support surface (78) for resting on the abutment (10), the tube portion (16) of which is shapeable with the milling cutter (36).

2. The abutment tool set according to claim 1, **characterized in that** the sleeve (42) is separated in relation to the milling cutter (36) and is designed as an exchangeable part, and **in that** the milling cutter (36) is partially insertable into the sleeve and has an outer diameter therein which matches the inner diameter of the sleeve (42), in particular in a clearance fit.

3. The abutment tool set according to one of the preceding claims, **characterized in that** the sleeve (42) comprises a base (80) with a guide opening (82), which guide opening (82) is evertable over the tube portion (16) of the abutment (10), and that the sleeve (42) supports the milling cutter (36) on a collar (14) of the abutment (10).

4. The abutment tool set according to one of the preceding claims, **characterized in that** the milling cutter (36) is designed as a multi-cutter, in particular as a three-cutter, and that the milling cutter (36) engages over the tube portion (16) of the abutment (10) from above.

5. The abutment tool set according to one of the preceding claims, **characterized in that** cutting edges (84) of the milling cutter (36) form a chamfer (86) which mill a corner radius of the tube portion (16) of the abutment (10).

6. The abutment tool set according to one of the preceding claims, **characterized in that** the milling cutter (36) comprises a working section (88) and a shaft (38), and **in that** the working section (88) merges with the shaft (38) via the stop surface (76) and comprises a height which is less than the height of the sleeve (42), when starting from the base (80).

7. The abutment tool set according to one of the preceding claims, **characterized in that** a tube portion (16) of the abutment (10) has marks, in particular three marks, corresponding to target heights S, M and L of the tube portion (16), to which target heights the tube portion (16) can be shortened with the milling cutter (36).

8. The abutment tool set according to one of the preceding claims, **characterized in that** the milling cutter (36) is designed as a manual milling cutter or as a machine milling cutter.

9. The abutment tool set for dental abutments, wherein the tool kit consists of a milling cutter (36), a sleeve (42) and an abutment (10), and wherein at least one stop surface (76) extending towards the sleeve (42) is formed on the milling cutter, wherein the abutment (10) is mountable on the implant in particular via a detachable connection and comprises an implant connection (12) and a tube portion (16), between which an outwardly projecting collar (14) extends, **characterized in that** the milling cutter (36) comprises at least one stop surface which is intended for at least indirect abutment on a surface of the abutment (10), in particular on the collar (14) of the abutment, and by means of which milling cutter (36) the length or height of the tube portion (16) of the abutment (10) is definable.

10. The abutment tool set according to claim 9, **characterized in that** the milling cutter (86) comprises a sleeve (42) as a height stop element, which limits the milling movement while the tube portion (16) of the abutment (10) is being milled, which sleeve (42) forms a stop relative to the collar (14) of the abutment.

11. The abutment tool set according to claim 9 or 10, **characterized in that** the milling cutter (36) forms a bell body (40), the front face of which has a groove (84) intended for shaping the front face of the tube portion (16).

12. The abutment tool set according to one of claims 9 to 11, **characterized in that** the milling cutter (36) comprises a bell body (40), and that a sleeve (42) surrounds the bell body and especially consists of plastic material.

13. The abutment tool set according to one of claims 9 to 11, **characterized in that** the sleeve (42) has at least one chip removal recess (50) which is adjacent to an end region of a bell body (40) of the milling cutter (36).

14. The abutment tool set according to one of the approaches 9 to 13, **characterized in that** the stop surface (76) is formed on an end face of the milling cutter (36) and is intended to abut against a bottom (94) of the sleeve (42).

## Revendications

1. Jeu d'outils pour piliers dentaires, où le jeu d'outils est constitué d'une fraise (36), d'un manchon (42) et d'un pilier (10), et où au moins une surface de butée (76) est formée sur la fraise qui s'étend en direction du manchon (42), où le pilier (10) peut être monté sur l'implant, en particulier par l'intermédiaire d'une liaison amovible, et présente une liaison d'implant (12) et un tronçon tubulaire (16), entre lesquels s'étend un collier (14) faisant saillie vers l'extérieur, **caractérisé en ce que** le manchon (42) présente une surface d'appui (78) pour l'appui sur le pilier (10), dont la partie tubulaire (16) peut être façonnée avec la fraise (36).

2. Jeu d'outils pour piliers selon la revendication 1, **caractérisé en ce que** le manchon (42) est séparé de la fraise (36) et est conçu comme pièce interchangeable, et **en ce que** la fraise (36) peut être partiellement insérée dans le manchon et y présente un diamètre extérieur qui correspond au diamètre intérieur du manchon (42), en particulier dans un ajustement avec jeu.

3. Jeu d'outils pour piliers selon l'une des revendications précédentes, **caractérisé en ce que** le manchon (42) présente un fond (80) avec une ouverture de guidage (82), laquelle ouverture de guidage (82) peut être glissée sur la partie tubulaire (16) du pilier (10) et **en ce que** le manchon (42) supporte la fraise (36) sur une collerette (14) du pilier (10).

4. Jeu d'outils pour piliers selon l'une des revendications précédentes, **caractérisé en ce que** la fraise (36) est conçue comme une fraise multiple, en particulier comme une fraise à trois coupeuses, et **en ce que** la fraise (36) se chevauche par le haut sur la section tubulaire (16) du pilier (10).

5. Jeu d'outils pour piliers selon l'une des revendications précédentes, **caractérisé en ce que** les arêtes tranchantes (84) de la fraise (36) forment un chanfrein (86) qui fraisent un rayon d'angle de la partie tubulaire (16) du pilier (10).

6. Jeu d'outils pour piliers selon l'une des revendications précédentes, **caractérisé en ce que** la fraise (36) présente une section de travail (88) et une tige (38) et **en ce que** la section de travail (88) passe à la tige (38) par la surface de butée (76) et présente une hauteur qui est inférieure à la hauteur du manchon (42) à partir de la base (80).

7. Jeu d'outils pour piliers selon l'une des revendications précédentes, **caractérisé en ce qu'**une partie tubulaire (16) du pilier (10) présente des marquages, en particulier trois marquages, correspondant à des hauteurs ciblées de la partie tubulaire (16) S, M et L, la partie tubulaire (16) pouvant être raccourcie avec la fraise (36) à ces hauteurs ciblées.

8. Jeu d'outils pour piliers selon l'une des revendications précédentes, **caractérisé en ce que** la fraise (36) est conçue comme une fraise à main ou comme une fraise mécanisée.

9. Jeu d'outils pour piliers dentaires, où le jeu d'outils est constitué d'une fraise (36), d'un manchon (42) et d'un pilier (10), et où au moins une surface de butée (76) s'étendant vers le manchon (42) est formée sur la fraise, où le pilier (10) peut être monté sur l'implant, en particulier par une liaison amovible, et présente un raccord d'implant (12) et une section tubulaire (16), entre lesquelles s'étend une collerette (14) faisant saillie vers l'extérieur, **caractérisé en ce que** la fraise (36) présente au moins une surface de butée qui est destinée à s'appuyer au moins indirectement sur une surface du pilier (10), en particulier sur la collerette (14) du pilier, et par ladite fraise la longueur ou la hauteur de la section tubulaire (16) du contrefort (10) peut être déterminée.

10. Jeu d'outils pour piliers selon la revendication 9, **caractérisé en ce que** la fraise (36) présente un manchon (42) comme élément de butée en hauteur qui limite le mouvement de fraisage lors du fraisage de la partie tubulaire (16) du pilier (10), où ledit manchon (42) forme une butée par rapport à la collerette (14) du pilier.

11. Jeu d'outils pour piliers selon la revendication 9 ou 10, **caractérisé en ce que** la fraise (36) forme un corps en cloche (40), dont la face frontale présente une rainure (84) destinée à former la face frontale de la partie tubulaire (16).

12. Jeu d'outils pour piliers selon l'une des revendications 9 à 11, **caractérisé en ce que** la fraise (36) présente un corps en cloche (40), et **en ce qu'**un manchon (42) entoure le corps en cloche et est constitué en particulier de matière plastique.

13. Jeu d'outils pour piliers selon l'une des revendications 9 à 11, **caractérisé en ce que** le manchon (42) présente au moins un évidement d'enlèvement de copeaux (50) qui est adjacent à une zone frontale d'un corps en cloche (40) de la fraise (36).

14. Jeu d'outils pour piliers réglé selon l'une quelconque des revendications 9 à 13, **caractérisé en ce que** la surface de butée (76) est formée sur une face frontale de la fraise (36) et est destinée à venir en butée contre un fond (94) du manchon (42).
